# EUROPEAN PATENT SPECIFICATION

(11) **EP 2 493 153 B1**
(45) Date of publication and mention of the grant of the patent: **01.05.2013**
(21) Application number: 11156109.8
(22) Date of filing: 25.02.2011
(51) Int. Cl.: H04M 1/02, G06F 1/16

(54) **Portable electronic device slidable in a plurality of directions for aligning the surfaces of the keypad and display portions**
Tragbare elektronische Vorrichtung, die zur Ausrichtung der Tastatur- und Anzeigeteile in mehrere Richtungen verschiebbar ist
Dispositif électronique portable pouvant coulisser dans une pluralité de directions pour aligner les surfaces d'un clavier et des parties d'écran

(43) Date of publication of application: 29.08.2012
(73) Proprietor: Research In Motion Limited, Waterloo, ON N2L 3W8 (CA)
(72) Inventor: Pegg, Albert, Waterloo Ontario N2L 3L3 (CA)
(74) Representative: Moore, Barry

(56) References cited:
- EP-A1- 1 667 408
- EP-A1- 1 796 351
- EP-A2- 1 585 316
- EP-A2- 1 804 468

## Description

Embodiments herein relate generally to portable electronic devices, and more particularly to slidable portable electronic devices having a display portion and a keypad portion slidable between an open position and a closed position.

Electronic devices, including portable electronic devices, have gained widespread use and may provide a variety of functions including, for example, telephonic, electronic text messaging and other personal information manager (PIM) application functions. Portable electronic devices can include mobile stations such as simple cellular phones, smart phones, Personal Digital Assistants (PDAs), tablets and laptop computers.

Some handheld devices are touch-sensitive devices having a display, such as a liquid crystal display (LCD), with a touch-sensitive overlay. These touch sensitive devices may be useful, as handheld devices tend to be small and therefore limited in space available for user input and output devices. Further, these touch-sensitive devices allow a variety of input and output configurations, for example, because the screen content on the touch-sensitive devices may change depending on the functions and operations being performed.

Sometimes it may be desirable to have a second input device that is distinct from the touch sensitive display, and which may have a keypad or other input devices thereon.

EP 1 804 468 A2 discloses a mobile communication terminal having two keypads. A mobile communication terminal comprises a first body having a left keypad installed at the left side of a front surface, and a second body having a display window installed at its left side and a right key installed at its right side, that is movably assembled with the front surface of the first body in the left or right direction. The mobile communication terminal may be used as a bar type communication terminal when the second body is not moved by sliding. If the left keypad of the first body is exposed by sliding down the second body, the two keypads are located at different sides of the display window, and thereby characters may be easily input with both hands. The two keypads arranged at different sides can each be or can both, be provided with a size large enough for individual character input.

EP 1 796 351 A1 discloses a mobile terminal having a first body, a second body slidably attached to the first body, and means for connecting the first body to the second body and allowing the second body to be moved between a closed position and an open position such that an overall thickness of the mobile terminal in the open position is thinner than an overall thickness of the mobile terminal in the closed position. The means includes a slide mechanism having at least one rail mechanism attached to the first body; and at least one slider mechanism attached to the second body and slidably engaged with the at least one rail mechanism.

EP 1 667 408 A1 discloses a portable terminal including a main housing, a sliding housing coupled to the main housing in such a manner that it can slide to expose or hide a part of a surface of the main housing, a keypad module positioned on the main housing and adapted to be exposed or hidden as the sliding housing moves, and a driving means positioned on the main housing to cause the keypad module, when exposed by the movement of the sliding housing, to protrude from a surface of the main housing. The sliding movement of the sliding housing is converted into up-and-down movement of the keypad module to overcome the difference in level among the upper surface of the sliding housing, the display device, and the keypad for convenient key input.

EP 1 585 316 A2 discloses a cellular phone set comprising a control device, a display device, a speaker, a microphone, a camera, a storage device, a power supply section, a communication device, an opened and closed state detector, and an acceleration sensor for detecting a state in which a second case has been started to be opened with respect to a first case, a state in which the second case has been started to be superimposed (closed) with respect to the first case, or an acceleration in a state in which the second case is completely superimposed (closed).

### GENERAL

According to some embodiments, there may be provided a portable electronic device, comprising: a first portion having a first surface; a second portion having a second surface; and a slide portion slidably coupled to the first and second portions; wherein the first portion, second portion and slide portion are adapted so that the first portion is adapted to slide along a first direction between a closed position wherein the first portion at least partially covers the second surface, and an extended position wherein the second surface is exposed, and when the first portion is in the extended position, the first portion and slide portion are adapted to slide relative to the second portion along a second direction into an open position in which the first surface and second surface are aligned.

### BRIEF DESCRIPTION OF THE DRAWINGS

Embodiments of the present disclosure will now be described, by way of example only, with reference to the attached figures, wherein:

Figure 1 is a simplified block diagram of components of a portable electronic device;

Figure 2 is a front view of a portable electronic device according to one embodiment shown in a closed position;

Figure 3 is a front view of the portable electronic device of Figure 2 shown in an open position;

Figure 4 is a side view of the portable electronic device of Figure 2 shown in the closed position;

Figure 5 is a side view of the portable electronic device of Figure 2 shown in the open position;

Figure 6 is a top view of the portable electronic device of Figure 2 shown in the closed position;

Figure 7 is a top view of the portable electronic device of Figure 2 shown in the open position;

Figure 8 is a cross-sectional top view of the portable electronic device of Figure 2 taken through line 8-8 showing the first slide mechanism between the display portion and the slide portion;

Figure 9 is a front view of a portable electronic device according to another embodiment shown in a closed position;

Figure 10 is a front view of the portable electronic device of Figure 9 shown in an open position;

Figure 11 is a top view of the portable electronic device of Figure 9 shown in the closed position; and

Figure 12 is a top view of the portable electronic device of Figure 9 shown in the open position.

### DETAILED DESCRIPTION

Described herein are various portable electronic devices that may include a touch-sensitive display disposed on a first portion, a keypad disposed on a second portion, a third portion that couples the first and second portions together, and functional components such as a computer memory and a processor.

It will be appreciated that for simplicity and clarity of illustration, where considered appropriate, reference numerals may be repeated among the figures to indicate corresponding or analogous elements. In addition, numerous specific details are set forth in order to provide a thorough understanding of the example embodiments described herein. However, it will be understood by those of ordinary skill in the art that the example embodiments described herein may be practiced without these specific details. In other instances, well-known methods, procedures and components have not been described in detail so as not to obscure the example embodiments described herein. Also, the description is not to be considered as limited to the scope of the example embodiments described herein.

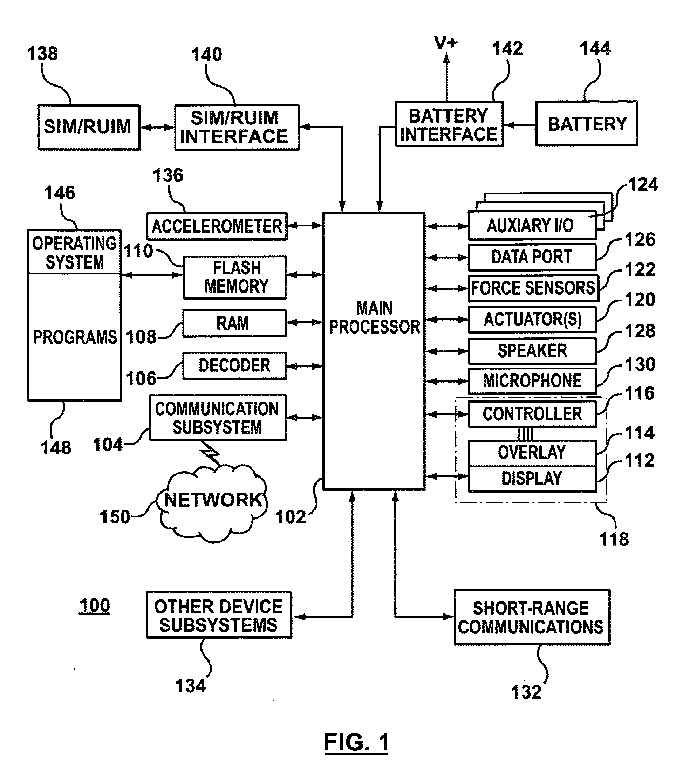

Figure 1 shows a simplified block diagram of components of a portable electronic device 100. The portable electronic device 100 includes multiple components, such as a processor 102, that control the operations of the portable electronic device 100. Communication functions, including data communications, voice communications, or both may be performed through a communication subsystem 104. Data received by the portable electronic device 100 may be decompressed and decrypted by a decoder 106. The communication subsystem 104 may receive messages from and send messages to a wireless network 150.

The wireless network 150 may be any type of wireless network, including, but not limited to, data-centric wireless networks, voice-centric wireless networks, and dual-mode networks that support both voice and data communications.

The portable electronic device 100 may be a battery-powered device and may include a battery interface 142 as shown for receiving one or more rechargeable batteries 144.

The processor 102 interacts with additional subsystems such as a Random Access Memory (RAM) 108, a flash memory 110, a display 112 (e.g. with a touch-sensitive overlay 114 connected to an electronic controller 116 that together comprise a touch-sensitive display 118), an actuator assembly 120, one or more optional force sensors 122, an auxiliary input/output (I/O) subsystem 124, a data port 126, a speaker 128, a microphone 130, short-range communications systems 132 and other device subsystems 134.

In some embodiments, user-interaction with the graphical user interface may be performed through the touch-sensitive overlay 114. The processor 102 may interact with the touch-sensitive overlay 114 via the electronic controller 116. Information, such as text, characters, symbols, images, icons, and other items that may be displayed or rendered on a portable electronic device may be generated by the processor 102 and displayed on the touch-sensitive display 118.

The processor 102 may also interact with an accelerometer 136 as shown in Figure 1. The accelerometer 136 may be utilized for detecting direction of gravitational forces or gravity-induced reaction forces.

To identify a subscriber for network access according to the present embodiment, the portable electronic device 100 may use a Subscriber Identity Module or a Removable User Identity Module (SIM/RUIM) card 138 inserted into a SIM/RUIM interface 140 for communication with a network (such as the wireless network 150). Alternatively, user identification information may be programmed into the flash memory 110 or performed using other techniques.

The portable electronic device 100 also includes an operating system 146 and software components or programs 148 that are executed by the processor 102 and which may be stored in a persistent data storage device such as the flash memory 110. Additional applications may be loaded onto the portable electronic device 100 through the wireless network 150, the auxiliary I/O subsystem 124, the data port 126, the short-range communications subsystem 132, or any of the other device subsystem 134 suitable for this purpose.

In use, a received signal such as a text message, an e-mail message, web page download, or other data may be processed by the communication subsystem 104 and provided to the processor 102. The processor 102 then processes the received signal for output to the display 112 or alternatively to the auxiliary I/O subsystem 124. A subscriber may also compose data items, such as e-mail messages, for example, which may be transmitted over the wireless network 150 through the communication subsystem 104.

For voice communications, the overall operation of the portable electronic device 100 may be similar. The speaker 128 may output audible information converted from electrical signals, and the microphone 130 may convert audible information into electrical signals for processing and transmittal.

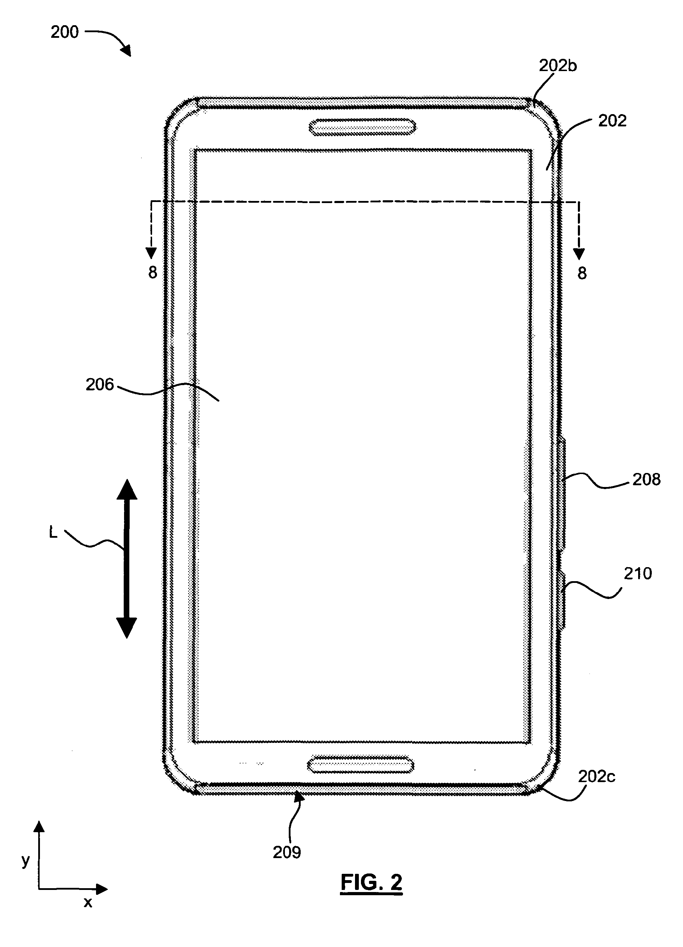

Turning now to Figures 2 to 8, illustrated therein is a portable electronic device 200 according to one embodiment. The portable electronic device 200 is a slidable device and generally includes a first portion (shown here as a display portion 202), a second portion (shown here as a keypad portion 204), and a third portion (shown here as a slide portion 205) that is coupled to both the display portion 202 and keypad portion 204.

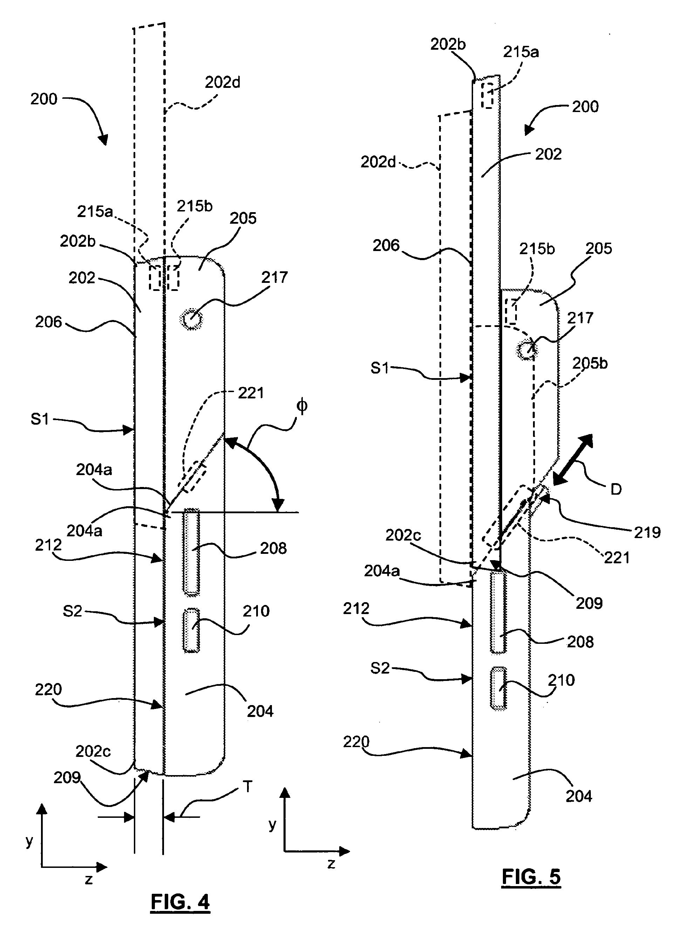

Generally the display portion 202, keypad portion 204, and slide portion 205 are sized and shaped so that the display portion 202 can move between a "closed position" wherein the display portion 202 covers at least a portion of the keypad portion 204 (e.g. the display portion 202 covers a surface S2 of the keypad portion 204 as shown in Figure 4), and an "open position" wherein the surface S2 of the keypad portion 204 is exposed and a surface S1 of the display portion 202 is aligned with the surface S2 of the keypad portion 204 (as shown in Figure 5).

In particular, the slide portion 205 and display portion 202 are slidably coupled so that the display portion 202 may be moved from the closed position along a first direction L to an extended position (as shown generally in dashed line 202d in Figures 4 and 5). When the display portion 202 has moved to the extended position 202d, the surface S2 of the keypad portion 204 is at least partially exposed. Furthermore, the surface S1 of the display portion 202 remains offset in front of the surface S2 of the keypad portion 204.

The slide portion 205 is also slidably coupled to the keypad portion 204 so that when the display portion 202 is sufficiently extended (e.g. into the extended position 202d), the display portion 202 and slide portion 205 can be moved in a second direction D so that the surface S1 of the display portion 202 and the surface S2 of the keypad portion 204 can be aligned or flush (as shown in Figure 5). In effect, the display portion 202 may be "dropped down" (e.g. along the z-direction) so that the two surfaces S1 and S2 align or are generally coplanar.

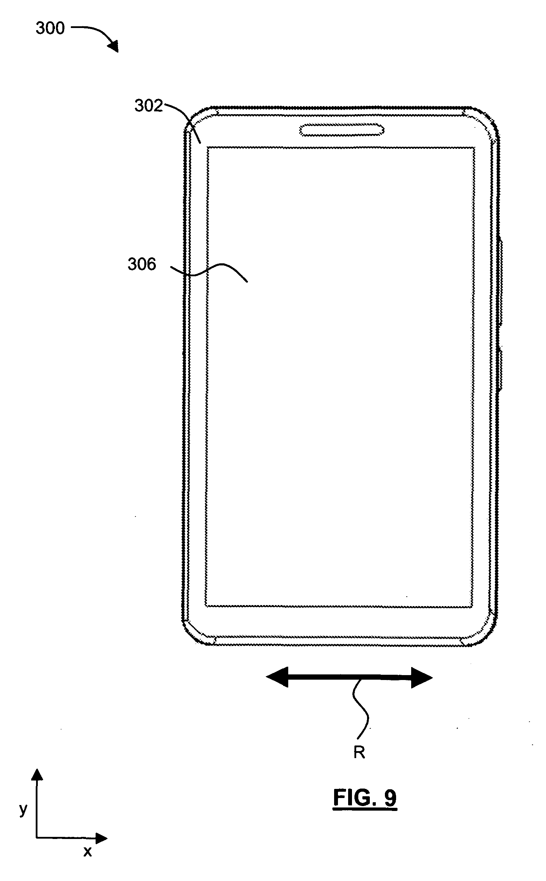

In this embodiment, the first direction L is generally aligned with the longitudinal axis of the portable electronic device 200, along the y-direction in the illustrated coordinate system. In other embodiments, the first direction may be in another direction, such as transverse to the longitudinal axis of the portable electronic device 200 (e.g. in the direction R as shown in Figures 9 to 12 and described below).

The second direction D has a component that extends normal to (or in a direction that is parallel to one of the normal vectors of) the surface S1 of the display portion 202 (e.g. along the z-axis). As shown, the second direction D may be angularly offset from the z-direction by a slide angle φ (shown in Figure 4), which in some embodiments may be greater than zero. Accordingly, as the display portion 202 and slide portion 205 are moved in the second direction D, the display portion 202 and slide portion 205 will move along both the z-axis by an amount proportional to the cosine of the slide angle φ, and along a direction aligned with the first direction L (e.g. the y-axis) by an amount proportional to the sine of the slide angle φ. Generally, the second direction D can be described as having a component aligned with the first direction L (e.g. the y-component) and another component aligned with a direction that is normal to the surface S1 of the display portion 202 (e.g. the z-component).

Selecting a slide angle φ greater than zero may allow for easier mechanical coupling between the display portion 202, the keypad portion 204, and the slide portion 205. Furthermore, when the slide angle φ is greater than zero, an upward force on the display portion 202 (e.g. a user's thumb or finger pushing on the display portion 202 along the first direction L) will tend to push the display portion 202 in the second direction D. This may make it easier for a user to move the display portion 202 to the open position.

In some embodiments the slide angle φ may be between 15 degrees and 75 degrees. In some embodiments the slide angle φ may be between 30 degrees and 60 degrees. In some embodiments the slide angle φ may be approximately 45 degrees.

In other embodiments, the slide angle φ may be less than zero (e.g. the slide angle φ may be negative).

As shown in Figure 4, the display portion 202 has a thickness T. Accordingly, when moving the display portion 202 to the open position to align the first and second surfaces S1 and S2, the slide portion 205 moves along the z-direction by a distance approximately equal to T. This means that the slide portion 205 should be moved in the second direction D by distance equal to the distance T divided by the cosine of the slide angle φ.

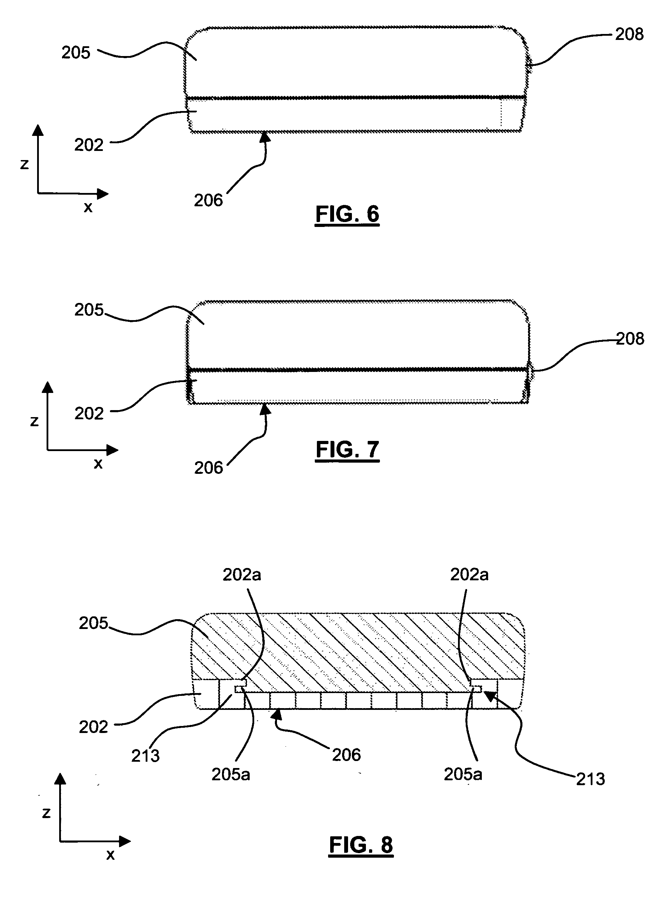

The display portion 202, keypad portion 204 and slide portion 205 may be slidably coupled together using various techniques. For example, as shown in Figure 8, the keypad portion 202 and slide portion 205 may be slidably coupled together using a first slide mechanism 213 that includes slide rails 202a on the display portion 202 and corresponding interlocking slide rails 205a on the slide portion 205. The slide rails 202a, 205a cooperate to allow relative movement between the display portion 202 and the slide portion 205 along the first direction L (e.g. along the y-axis) but inhibit movement in the x and z directions.

Similarly, the slide portion 205 and keypad portion 204 may be slidably coupled together using a second slide mechanism 219 (as shown in Figure 5), which may also include interlocking slide rails similar to slide rails 202a, 205a. The second slide mechanism 219 allows for relative movement between the slide portion 205 and the keypad portion 204 along the second direction D so that the surfaces S1 and S2 of the display portion and keypad portion 204 can be aligned or made flush. In this embodiment, the second slide mechanism 219 is inclined upwardly (from front to back of the device 200) so as to define the slide angle φ.

In some embodiments, one or both of the slide mechanisms 213 and 219 may have other configurations, for example, a tongue in groove arrangement that allows sliding movement between the display portion 202, the keyboard portion 204 or the slide portion 205.

In some embodiments, one or both of the first slide mechanism 213 and second slide mechanism 219 may include a biasing member (e.g. a spring, such as a compression or extension spring, or another biasing member). The biasing member(s) may help encourage at least one of the slide portion 205 and display portion 202 to move between one or more of the open position, the extended position 202d, and the closed position. For example, a spring 221 may be compressed when the portable electronic device 200 is in the closed position (see Figure 4) and extended when the portable electronic device 200 is in the open position (see Figure 5).

In some embodiments, one or more locking members, locks or latches (e.g. mechanical locks, magnets, etc.) may be provided in one or more of the display portion 202, keypad portion 204 and slide portion 205 to help retain the portable electronic device in one or more of the closed position, the extended position 202d, and the open position. For example, as shown in Figures 4 and 5, magnets 215a, 215b in the display portion 202 and the slide portion 205 (respectively) may attract each other and help retain the device 200 in the closed position, but may not substantially interact with each other when the device 200 is in the open position.

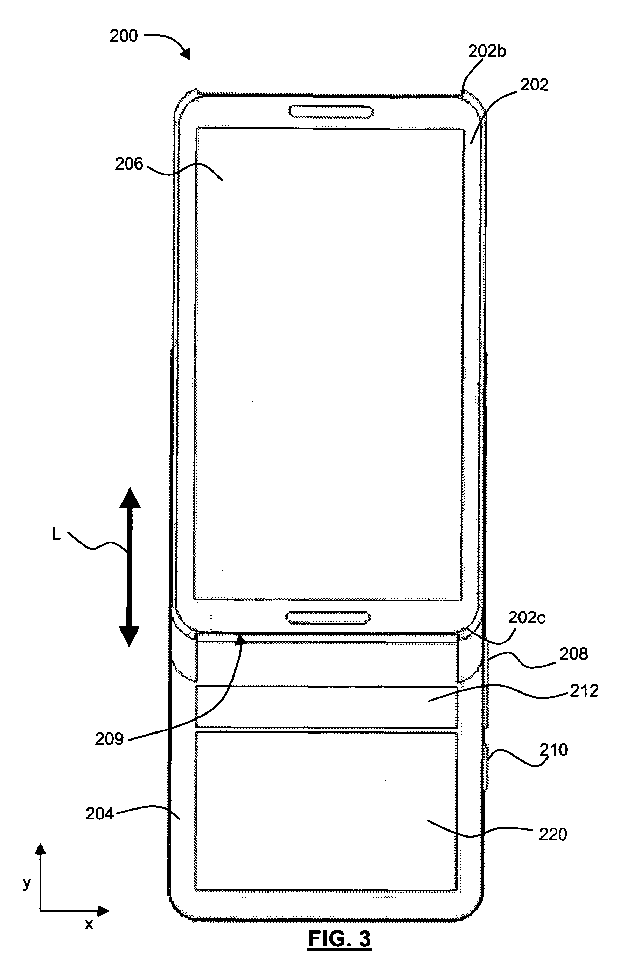

When moving the display portion 202 from the closed position (shown in Figure 2) to the open position (shown in Figure 3), a user may push upwardly on the display portion 202 (e.g. towards a top end 202b of the display portion 202 using their thumb or finger), causing the display portion 202 to slide upwardly along the first direction L. In some embodiments, this movement may be facilitated by a biasing member (e.g. a spring).

Once the display portion 202 moves to the extended position 202d, the bottom end 202c of the display portion 202 is clear of an edge of corner 204a of the surface S2 of the keypad portion 204, and the display portion 202 can then be moved in the second direction D to align the surfaces S1 and S2.

In some embodiments, the movement in the second direction D may be effected by the user continuing to push upwardly on the display portion 202. In some embodiments, movement in the second direction D may be at least partially assisted by a biasing member (e.g. a spring) that biases the slide portion 205 along the second direction D into the open position. Once in the open position, a locking mechanism (e.g. a latch or magnet) may help retain the portable electronic device 200 in the open position.

In some embodiments, the bottom end 202c of the display portion 202 may include a recessed portion 209 adapted to facilitate clearance of the display portion 202 past the corner 204a of the keypad portion 204.

When the user wants to move the portable electronic device 200 back to the closed position (e.g. to close the portable electronic device 200), the user may press the back of the slide portion 205, moving the display portion 202 and slide portion 205 along the second direction D back into the extended position, and then sliding the display portion 202 downwards to cover the keypad portion 204. In some embodiments, springs or other biasing members may help facilitate closing of the portable electronic device 200, and one or more locks may help retain the portable electronic device 200 in the closed position.

In some embodiments, the first and second surfaces S1 and S2 are "active" surfaces in that they may include one or more input or output devices (or both), such as display screens, buttons, etc. For example, the first surface S1 could be the surface of the display 206, and the second surface S2 could be the surface of the keypad 220, input devices 212, or another portion of the keypad portion 204.

Aligning the "active" surfaces S1 and S2 when the portable electronic device 200 is open may be beneficial. For example, user interaction with the portable electronic device 200 may be improved as a user may be able to transition from engaging the first surface S1 (e.g. touching the display 206 using a finger) to engaging the second surface S2 (e.g. input devices 212 or keypad 220 on the second surface S2 of the keypad portion 204) generally without encountering discontinuities, such as a lip or stepped portion.

While the portable electronic device 200 has been described with respect to a touch screen display 206 and a keypad 220, the portable electronic device 200 may include other input and output devices, and may have other configurations as will be appreciated from the following description of some more exemplary input and output devices.

In some embodiments, the display 206 could be an LCD display with touch screen capabilities. For example, the display 206 could be the display 118 as generally described above. In some other embodiments, the display 206 may not be a touch screen display.

The portable electronic device 200 may include other input devices, such as navigation keys or buttons, a physical or virtual keyboard, a trackpad, a trackball, multimedia keys, etc. For example, in this embodiment the keypad portion 204 includes one or more input devices 212, which could include an optical navigation module (e.g. a trackpad), buttons, such as a phone application button, a home screen button, etc. In some embodiments, these input devices may include optical sensors, mechanical buttons, "soft keys", or various combinations thereof.

In some embodiments, the keypad 220 may include a plurality of alphanumeric keys for inputting data into and controlling the portable electronic device 200. In some embodiments, the keys may represent an alphabet and may be arranged with a standard keyboard layout (e.g. QWERTY, QWERTZ, DVORAK, etc.) or according to other particular patterns. In some embodiments, the keypad 220 could be a physical keypad 220 with mechanical keys. In other embodiments, the keypad 220 could be a touch screen with soft keys.

As shown in Figures 3 and 5, when the portable electronic device 200 is in the open position, the keypad 220 on the keypad portion 204 may be exposed for user access. As shown in Figures 2 and 4, when the portable electronic device 200 is in the closed position, the keypad 220 is generally covered by the display portion 202. This may be beneficial as it may protect the keypad 220 when not in use, and may also inhibit undesired keys from being pressed when a user is carrying the portable electronic device 200 (e.g. in a pocket).

In some embodiments, the keypad portion 204 includes physical buttons 208 and 210 on a side of the keypad portion 204. In some embodiments, buttons 208, 210 could be used for navigation, volume control, or for other purposes. The portable electronic device 200 as shown also includes an audio jack 217 on the side of the slide portion 205, which may be used to couple the portable electronic device 200 to a speaker, a microphone, etc. In some embodiments, the slide portion 205 may include other input and output devices.

In some embodiments (e.g. when the display 206 is a touch screen), the user may be able to perform functions on the portable electronic device 200 when closed, for example, by interacting with the accessible input devices (e.g. buttons 208, 210, the display screen 206, etc.). Then, when the device 200 is open, functions can be performed using other input devices, such as the input devices 212 and keypad 220.

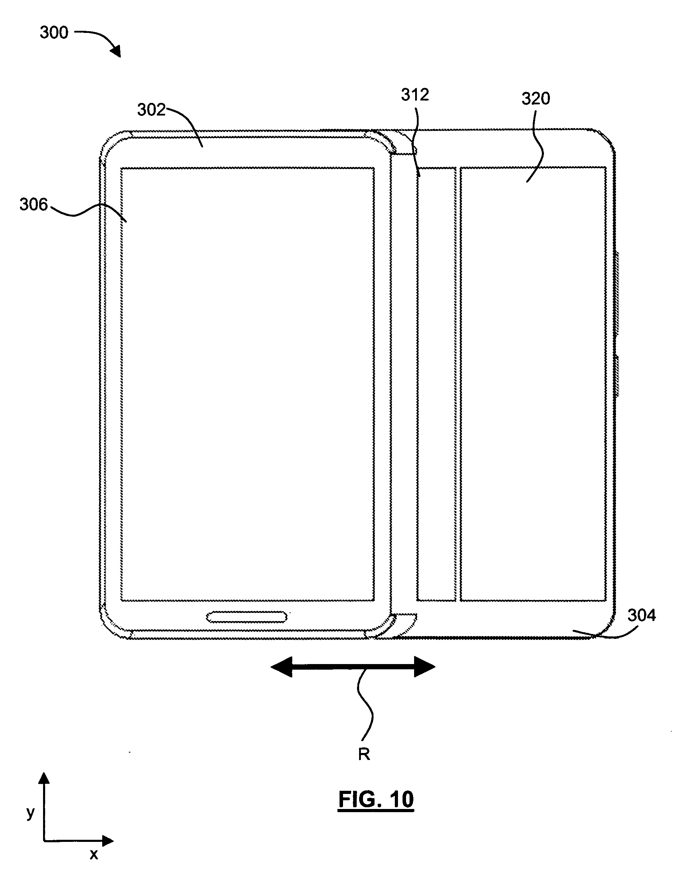

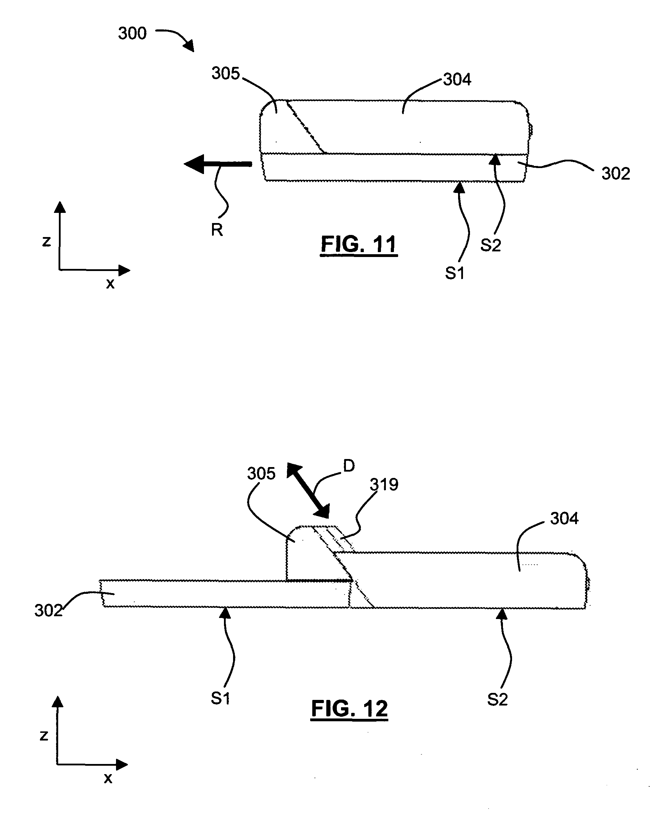

Turning now to Figures 9 to 12, illustrated generally therein is a portable electronic device 300 according to another embodiment. The portable electronic device 300 is generally similar to the portable electronic device 200 described above. In particular, the portable electronic device 300 includes a first portion (e.g. a display portion 302), a second portion (e.g. a keypad portion 304), and a third portion (e.g. a slide portion 305) that is slidably coupled to both the display portion 302 and keypad portion 304 so that the display portion 302 can move between a closed position wherein the display portion 302 covers at least a portion of the keypad portion 304 as shown in Figures 9 and 11), and an open position (as shown in Figures 10 and 12) wherein the surface S2 of the keypad portion 304 is at least partially exposed and the surfaces S1, S2 of the display portion 302 and keypad portion 304 are aligned or flush. In some embodiments, the display 306 may be a touch screen display and the keypad portion 304 may include input devices 312 and a keypad 320 with a plurality of keys.

However, in this embodiment the display portion 302 is adapted to move in a first direction R that is generally transverse to the longitudinal direction of the portable electronic device 300 (e.g. in a direction along the x-axis). Then, once the display portion 302 is sufficiently extended, the display portion 302 can be moved in a second direction D (e.g. using a slide mechanism 319) so that the surface S1 of the display portion 302 can be aligned with the surface S2 of the keypad portion 304. Accordingly, this portable electronic device 300 may be operated with the keypad 320 and display 306 in a "landscape" mode when open (as opposed to the portable electronic device 200 which operates in a "portrait" mode when open). The mechanisms for the device 300 which enable the display portion 302 to be moved relative to the keyboard portion 304 may be the same as that described above with respect to the device 200, and therefore will not be described in any detail herein.

In some other embodiments, a portable electronic device may be provided that can slide in both a longitudinal and transverse directions, so that the device can be selectively operated in either a landscape mode or portrait mode.

While reference has been made herein to portable electronic devices wherein a first portion is a display portion, a second portion is a keypad portion, and a third portion is a slide portion, this is not meant to be limiting and other configurations are possible. For example, the first portion and second portion may both be touchscreen portions with no keypad. In other examples, the first portion may have a keypad and the second portion may include a display.

While the above description provides examples of one or more processes or apparatuses, it will be appreciated that other processes or apparatuses may be within the scope of the accompanying claims.

## Claims

1. A portable electronic device (200, 300), comprising:
a first portion (202) having a first surface (S1);
a second portion (204) having a second surface (S2); and
a slide portion (205) slidably coupled to the first and second portions (202, 204);
wherein the first portion (202), second portion (204) and slide portion (205) are adapted so that the first portion (202) is adapted to slide along a first direction (L, R) between a closed position wherein the first portion (202) at least partially covers the second surface (S2), and an extended position wherein the second surface (S2) is exposed, and when the first portion (202) is in the extended position, the first portion (202) and slide portion (205) are adapted to slide relative to the second portion (204) along a second direction (D) into an open position in which the first surface (S1) and second surface (S2) are aligned.

2. The portable electronic device (200) of claim 1, wherein the first portion is a display portion (202) and includes a display (206).

3. The portable electronic device (200) of claim 1 or claim 2, wherein the second portion (204) is a keypad portion and includes a keypad (220).

4. The portable electronic device (200) of any preceding claim, wherein the first direction (L) is aligned with a longitudinal axis of the portable electronic device (200).

5. The portable electronic device (300) of any one of claims 1 to 3, wherein the first direction (R) is transverse to a longitudinal axis of the portable electronic device (300).

6. The portable electronic device (200) of any preceding claim, wherein the second direction (D) has a component normal to the first surface (S1) of the first portion (202).

7. The portable electronic device (200) of any preceding claim, wherein the second direction (D) is inclined upwardly by a slide angle (φ) and has a component aligned with the first direction (L, R).

8. The portable electronic device (200) of claim 7, wherein the slide angle (φ) is between 15 and 75 degrees.

9. The portable electronic device (200) of any preceding claim, wherein the first portion (202) and slide portion (205) are slidably coupled together using a first slide mechanism (213).

10. The portable electronic device (200) of any preceding claim, wherein the second portion (204) and slide portion (205) are slidably coupled together using a second slide mechanism (219).

11. The portable electronic device (200) of any preceding claim, further comprising at least one biasing member (221) for biasing the portable electronic device (200) to at least one of the closed position, the extended position, and the open position.

12. The portable electronic device (200) of claim 11, wherein the at least one biasing member includes a spring (221).

13. The portable electronic device (200) of any preceding claim, further comprising at least one locking member (215a, 215b) for retaining the portable electronic device (200) in at least one of the closed position, the extended position, and the open position.

14. The portable electronic device (200) of claim 13, wherein the at least one locking member (215a, 215b) includes at least one magnet (215a, 215b).

15. The portable electronic device (200) of any preceding claim wherein a bottom end (202c) of the first portion (202) includes a recessed portion (209) adapted to facilitate clearance of the first portion (202) past the second portion (204).

## Patentansprüche

1. Eine tragbare elektronische Vorrichtung (200, 300), die aufweist:
einen ersten Teil (202) mit einer ersten Oberfläche (S1);
einen zweiten Teil (204) mit einer zweiten Oberfläche (S₂); und
einen Gleit- bzw. Verschiebeteil (205), der verschiebbar mit den ersten und zweiten Teilen (202, 204) gekoppelt ist;
wobei der erste Teil (202), der zweite Teil (204) und der Verschiebeteil (205) derart ausgebildet sind, dass der erste Teil (202) ausgebildet ist, entlang einer ersten Richtung (L, R) zwischen einer geschlossenen Position, in der der erste Teil (202) zumindest teilweise die zweite Oberfläche (S2) abdeckt, und einer ausgefahrenen Position, in der die zweite Oberfläche (S2) freigelegt ist, verschoben zu werden, und wenn der erste Teil (202) in der ausgefahrenen Position ist, der erste Teil (202) und der Verschiebeteil (205) ausgebildet sind, relativ zu dem zweiten Teil (204) entlang einer zweiten Richtung (D) in eine offene Position verschoben zu werden, in der die erste Oberfläche (S1) und die zweite Oberfläche (S2) ausgerichtet sind.

2. Die tragbare elektronische Vorrichtung (200) gemäß Anspruch 1, wobei der erste Teil ein Anzeigeteil (202) ist und eine Anzeige (206) umfasst.

3. Die tragbare elektronische Vorrichtung (200) gemäß Anspruch 1 der Anspruch 2, wobei der zweite Teil (204) ein Tastaturteil ist und eine Tastatur (220) umfasst.

4. Die tragbare elektronische Vorrichtung (200) gemäß einem vorhergehenden Anspruch, wobei die erste Richtung (L) mit einer Längsachse der tragbaren elektronischen Vorrichtung (200) ausgerichtet ist.

5. Die tragbare elektronische Vorrichtung (300) gemäß einem der Ansprüche 1 bis 3, wobei die erste Richtung (R) quer zu einer Längsachse der tragbaren elektronischen Vorrichtung (300) ist.

6. Die tragbare elektronische Vorrichtung (200) gemäß einem vorhergehenden Anspruch, wobei die zweite Richtung (D) eine Komponente hat, die senkrecht zu der ersten Oberfläche (S1) des ersten Teils (202) ist.

7. Die tragbare elektronische Vorrichtung (200) gemäß einem vorhergehenden Anspruch, wobei die zweite Richtung (D) um einen Verschiebewinkel (φ) nach oben geneigt ist und eine Komponente hat, die mit der ersten Richtung (L, R) ausgerichtet ist.

8. Die tragbare elektronische Vorrichtung (200) gemäß Anspruch 7, wobei der Verschiebewinkel (φ) zwischen 15 und 75 Grad ist.

9. Die tragbare elektronische Vorrichtung (200) gemäß einem vorhergehenden Anspruch, wobei der erste Teil (202) und der Verschiebeteil (205) verschiebbar miteinander gekoppelt sind unter Verwendung eines ersten Gleitmechanismus (213).

10. Die tragbare elektronische Vorrichtung (200) gemäß einem vorhergehenden Anspruch, wobei der zweite Teil (204) und der Verschiebeteil (205) verschiebbar miteinander gekoppelt sind unter Verwendung eines zweiten Gleitmechanismus (219).

11. Die tragbare elektronische Vorrichtung (200) gemäß einem vorhergehenden Anspruch, die weiter aufweist zumindest ein Beeinflussen-Element (221) zum Beeinflussen der tragbaren elektronischen Vorrichtung (200) in zumindest eine der geschlossenen Position, der ausgezogenen Position und der offenen Position.

12. Die tragbare elektronische Vorrichtung (200) gemäß Anspruch 11, wobei das zumindest eine Beeinflussen-Element eine Feder (221) umfasst.

13. Die tragbare elektronische Vorrichtung (200) gemäß einem vorhergehenden Anspruch, die weiter aufweist zumindest ein Verriegelungselement (215a, 215b) zum Halten der tragbaren elektronischen Vorrichtung (200) in zumindest einer der geschlossenen Position, der ausgezogenen Position und der offenen Position.

14. Die tragbare elektronische Vorrichtung (200) gemäß Anspruch 13, wobei das zumindest eine Verriegelungselement (215a, 215b) zumindest einen Magnet (215a, 215b) umfasst.

15. Die tragbare elektronische Vorrichtung (200) gemäß einem vorhergehenden Anspruch, wobei ein unteres Ende (202c) des ersten Teils (202) einen zurückgesetzten Teil (209) umfasst, der ausgebildet ist, eine Beweglichkeit des ersten Teils (202) über den zweiten Teil (204) hinaus zu erleichtern.

## Revendications

1. Dispositif électronique portatif (200, 300), comprenant :
une première partie (202) ayant une première face (S1) ;
une seconde partie (204) ayant une seconde face (S2) ; et
une partie coulissante (205) accouplée de manière coulissante aux première et seconde parties (202, 204),
dans lequel la première partie (202), la seconde partie (204) et la partie coulissante (205) sont conçues de façon que la première partie (202) est apte à coulisser suivant une première direction (L, R) entre une position fermée dans laquelle la première partie (202) couvre au moins partiellement la seconde face (S2), et une position étendue dans laquelle la seconde face (S2) est accessible, et lorsque la première partie (202) est dans la position étendue, la première partie (202) et la partie coulissante (205) sont aptes à coulisser par rapport à la seconde partie (204) suivant une seconde direction (D) pour venir à une position ouverte dans laquelle la première face (S1) et la seconde face (S2) sont alignées.

2. Dispositif électronique portatif (200) selon la revendication 1, dans lequel la première partie est une partie d'affichage (202) et inclut un écran (206).

3. Dispositif électronique portatif (200) selon la revendication 1 ou la revendication 2, dans lequel la seconde partie (204) et une partie clavier et inclut un clavier (220).

4. Dispositif électronique portatif (200) selon l'une quelconque des revendications précédentes, dans lequel la première direction (L) est alignée avec l'axe longitudinal du dispositif électronique portatif (200).

5. Dispositif électronique portatif (300) selon l'une quelconque des revendications 1 à 3, dans lequel la première direction (R) est transversale à l'axe longitudinal du dispositif électronique portatif (300).

6. Dispositif électronique portatif (200) selon l'une quelconque des revendications précédentes, dans lequel la seconde direction (D) a une composante perpendiculaire à la première face (S1) de la première partie (202).

7. Dispositif électronique portatif (200) selon l'une quelconque des revendications précédentes, dans lequel la seconde direction (D) est inclinée vers le haut d'un angle (φ) de coulissement et a une composante alignée avec la première direction (L, R).

8. Dispositif électronique portatif (200) selon la revendication 7, dans lequel l'angle (φ) de coulissement est entre 15 et 75 degrés.

9. Dispositif électronique portatif (200) selon l'une quelconque des revendications précédentes, dans lequel la première partie (202) et la partie coulissante (205) sont accouplées l'une à l'autre de manière coulissante en utilisant un premier mécanisme (213) de coulissement.

10. Dispositif électronique portatif (200) selon l'une quelconque des revendications précédentes, dans lequel la seconde partie (204) et la partie coulissante (205) sont accouplées l'une à l'autre de manière coulissante en utilisant un second mécanisme (219) de coulissement.

11. Dispositif électronique portatif (200) selon l'une quelconque des revendications précédentes, comprenant en outre au moins un organe (221) de rappel destiné à rappeler le dispositif électronique portatif (200) jusqu'à au moins l'une de la position fermée, de la position étendue et de la position ouverte.

12. Dispositif électronique portatif (200) selon la revendication 11, dans lequel l'au moins un organe de rappel inclut un ressort (221).

13. Dispositif électronique portatif (200) selon l'une quelconque des revendications précédentes, comprenant en outre au moins un organe (215a, 215b) de verrouillage destiné à maintenir le dispositif électronique portatif (200) dans au moins l'une de la position fermée, de la position étendue et de la position ouverte.

14. Dispositif électronique portatif (200) selon la revendication 13, dans lequel l'au moins un organe (215a, 215b) de verrouillage inclut au moins un aimant (215a, 215b).

15. Dispositif électronique portatif (200) selon l'une quelconque des revendications précédentes, dans lequel la partie inférieure (202c) de la première partie (202) inclut une partie en retrait (209) apte à faciliter le débattement de la première partie (202) devant la seconde partie (204).
